# DEMANDE DE BREVET EUROPEEN

(11) **EP 1 882 871 A1**
(43) Date de publication de la demande: **30.01.2008**
(21) Numéro de dépôt: 07113154.4
(22) Date de dépôt: 25.07.2007
(51) Int. Cl.: F16H 61/26, F16H 63/42

(54) **Boîte de vitesses d'un véhicule automobile comportant un capteur magnétique à effet Hall**

(30) Priorité: 26.07.2006 FR 0606852
(71) Demandeur: SC2N, 94000 Créteil (FR)
(72) Inventeur: Guibet, Vincent, 14120 Mondeville (FR); Flohic, Nicolas, 14120 Mondeville (FR)
(74) Mandataire: Croonenbroek, Thomas Jakob

(57) **Abrégé**

La présente invention a pour objet une boîte de vitesses d'un véhicule automobile comprenant une tige d'actionnement (3) des rapports de vitesses mobile en rotation et en translation sur des courses limitées prédéfines et un capteur de position (17) comprenant une cible aimantée (19) fixée sur ladite tige d'actionnement (3) caractérisée en ce que le capteur comporte un composant à effet Hall (21) apte à mesurer un champ magnétique selon trois directions orthogonales (Bx,By,Bz) pour déterminer la position et l'orientation de la cible (19) dans l'espace et pour en déduire la position de la boîte de vitesses.

## Description

La présente invention concerne un capteur de position d'une boîte de vitesses d'un véhicule automobile.

On connaît dans la technique des capteurs de positions de boîtes de vitesses automatiques ou robotisées.

Ces capteurs sont prévus dès la conception d'une boîte de vitesses et sont intégrés avec celle-ci, souvent au niveau des actionneurs permettant de faire des changements de vitesses. Pour ces capteurs, des technologies diverses sont appliquées. Par exemple, on connaît des capteurs de positionnement à base d'un potentiomètre pour connaître la position d'un actionneur et pour en déduire la position de la boîte de vitesses, c'est-à-dire si et quel rapport de vitesses est engagé.

D'autres technologies, comme des technologies magnétiques à effet Hall ou inductives trouvent aussi depuis peu leur application dans le cadre des capteurs de position pour des boîtes de vitesses automatiques ou robotisées. A titre d'exemple, on cite le document WO 2005 / 064281 qui décrit un capteur de position intégré qui détecte par effet Hall la position d'un axe de transmission de la boîte de vitesses spécifiquement encodé par aimants dans plusieurs régions. Toutefois, ce capteur est complexe et très onéreux.

Récemment, dans le domaine automobile sont apparus des systèmes appelés « STOP&START » pour les véhicules équipés d'une boîte de vitesses robotisée ou automatisée. Il s'agit de systèmes qui gèrent l'arrêt du moteur lorsque le véhicule s'arrête pendant une durée prédéfinie, par exemple devant un feu rouge, et qui démarrent automatiquement le moteur lorsque le conducteur appuie à nouveau sur la pédale d'accélérateur.

Ce système permet d'économiser, en particulier en ville, une quantité importante de carburant et rencontre pour cette raison un succès important.

Il faut savoir que pour des raisons de sécurité, il est indispensable de connaître la position de la boîte de vitesses à l'arrêt, avant de démarrer le moteur à nouveau.

En effet, il faut que la boîte de vitesses soit dans sa position « neutre », c'est-à-dire sans rapport de vitesse engagé afin d'éviter une propulsion vers l'avant du véhicule lors du démarrage, ce qui pourrait causer facilement un accident si un autre véhicule ou un piéton se trouve juste devant.

Une demande est maintenant apparue de pouvoir étendre ce système à des véhicules équipés de boîtes de vitesses manuelles. Toutefois, les capteurs de position utilisés dans le cadre d'une boîte de vitesse automatique ou robotisée se sont révélés inadaptés pour une utilisation sur une boîte de vitesses manuelle pour des raisons de coût et de complexité. De plus, l'adaptation d'un système « STOP&START » devrait se faire sur des boîtes de vitesses manuelles existantes avec seulement de légères modifications qui ne touchent pas au fonctionnement même de la boîte de vitesses. De préférence, cette adaptation devrait être conçue comme une simple option qui peut être rajoutée à la demande d'un client.

La présente invention vise à proposer un capteur de position pour une boîte de vitesses qui puisse être facilement adapté sur des boîtes de vitesses existantes pour détecter au moins la position « neutre » d'une telle boîte de vitesses.

Pour résoudre ce problème, les inventeurs de la présente invention ont attentivement étudié les boîtes de vitesses manuelles existantes. Ils ont constaté que ces boîtes de vitesses possèdent toutes un élément d'actionnement à l'entrée de la boîte de vitesses qui est relié via une tringlerie au levier de sélection manuelle des vitesses (voir par exemple le document EP 0 273 874). Cet élément possède une forme générale d'une tige qui est mobile sur une course prédéfinie en rotation et en translation et elle se déplace en fonction des mouvements du levier de vitesses.

En faisant preuve d'esprit d'innovation, ils ont constaté qu'en déterminant la position aussi bien en translation qu'en rotation de cet élément d'actionnement, on pouvait en déduire de façon fiable au moins la position « neutre », voir en cas de besoin toutes les positions de la boîte de vitesses et connaître le cas échéant les rapports engagés.

A cet effet, l'invention a pour objet un capteur de position d'une boîte de vitesses d'un véhicule automobile, caractérisé en ce qu'il comprend une cible aimantée destinée à être fixée sur une tige d'actionnement des rapports d'une boîte de vitesses, la tige étant mobile en rotation et en translation sur des courses limitées prédéfinies, et un composant à effet Hall apte à mesurer un champ magnétique selon trois directions orthogonales pour déterminer la position et l'orientation de la cible dans l'espace et pour en déduire la position de la boîte de vitesses.

L'invention a également pour objet une boîte de vitesses manuelle, comprenant une tige d'actionnement des rapports de vitesses mobile en rotation et en translation sur des courses limitées prédéfinies et un capteur de position, caractérisé en ce qu'elle comprend un capteur tel que défini ci-dessus.

D'autres avantages et caractéristiques apparaîtront à la lecture de la description de l'invention, ainsi que sur les figures annexées sur lesquelles :
- la figure 1 est une vue en coupe longitudinale d'une partie d'une boîte de vitesses manuelle équipée d'un capteur selon l'invention,

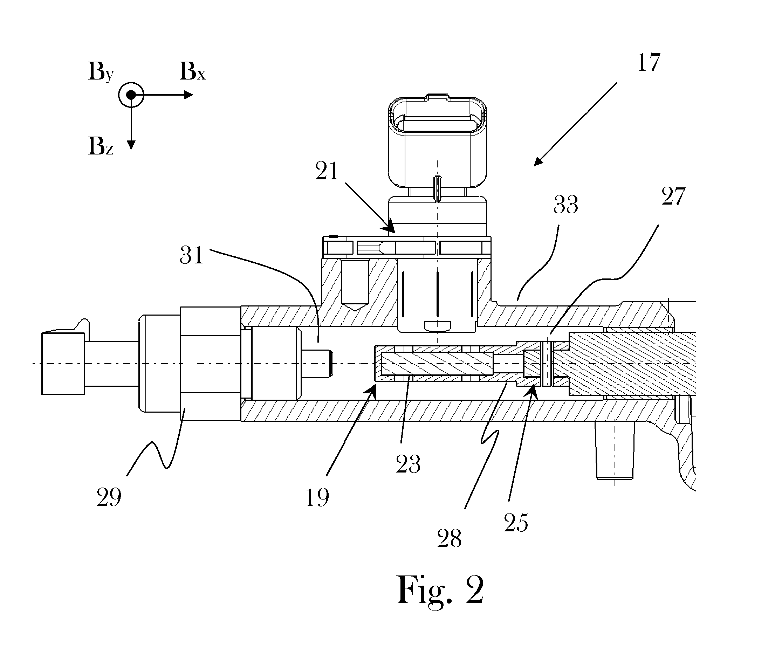

- la figure 2 est une vue agrandie de la figure 1 montrant plus en détail la partie de la boîte de vitesses accueillant le capteur selon l'invention, et
- la figure 3 est un schéma illustrant le fonctionnement du capteur selon l'invention.

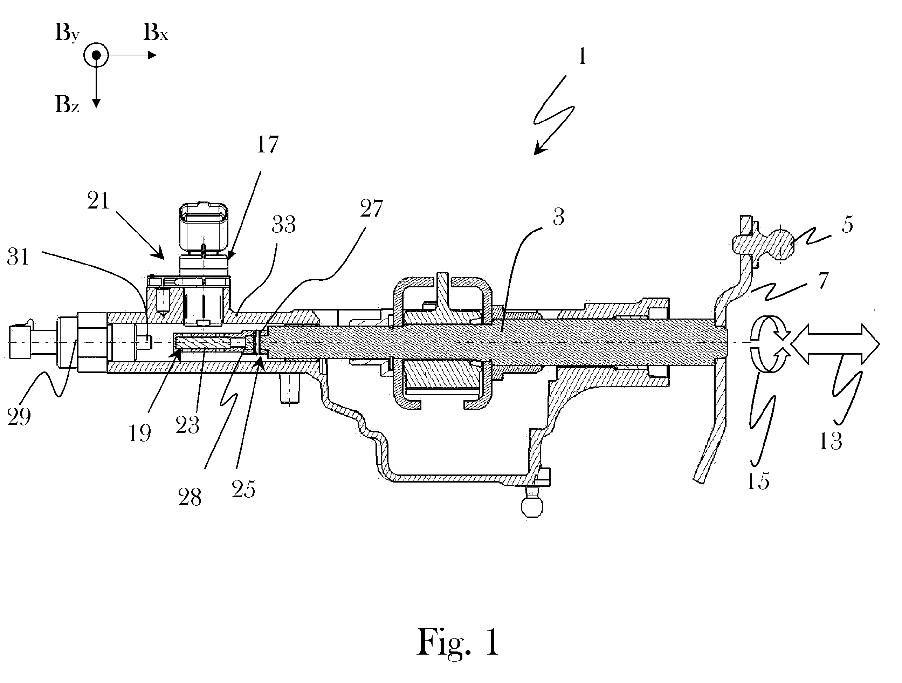

La figure 1 montre une vue en coupe longitudinale d'une partie d'une boîte de vitesses manuelle 1 selon l'invention.

Cette boîte de vitesses comprend une tige 3 d'actionnement des divers rapports de vitesses en fonction des commandes appliquées par un levier de vitesses via une tringlerie non représentée (voir par exemple la tringlerie de transmission entre le levier de vitesses et la boîte de vitesses décrite dans EP 0 273 874).

Cette tringlerie est accrochée à une rotule 5 portée par un bras de commande 7 fixé à une extrémité 11 de la tige d'actionnement.

Autour de la position neutre de la boîte de vitesses, la tige d'actionnement 3 est mobile en translation (voir flèche 13) et en rotation (voir flèches 15). La course Lc en translation de la tige d'actionnement est en général d'environ 30mm (de -15mm à +15mm) et la course en rotation est en général d'environ 60° (de - 30° à + 30°).

Le fonctionnement de la boîte de vitesses avec ses mécanismes de changement de rapports est connu en soi et ne fera pas objet d'une description plus détaillée.

Comme on le voit sur la figure 1, la boîte de vitesses est équipée d'un capteur 17 de position.

Ce capteur 17 comprend principalement une cible aimantée 19 et un composant de mesure à effet Hall 21 apte à mesurer un champ magnétique selon trois directions orthogonales (Bx, By, Bz, le repère est montré sur les figures avec By sortant du plan défini par la coupe) pour déterminer la position et l'orientation de la cible dans l'espace et pour en déduire la position de la boîte de vitesses.

La cible 19 est fixée sur la tige d'actionnement 3 par l'intermédiaire d'un support de cible 23 à l'autre extrémité 25 de la tige d'actionnement 3.

L'extrémité de fixation 28 du support 23 présente une section de centrage et d'entraînement, de préférence une section carrée apte à coopérer avec une forme complémentaire de l'extrémité 25 de la tige d'actionnement 3.

Ce support 23 est réalisé en un matériau non ferromagnétique, de préférence en matière plastique, et est maintenu via une goupille de fixation 27 d'orientation radiale.
La disposition de la cible 19 avec son support 23 à l'extrémité 25 est particulièrement intéressante, car la cible 19 se trouve en regard d'un commutateur de marche arrière 29 qui allume les feux arrières de recul lorsqu'un utilisateur enclenche la marche arrière de la boîte de vitesses.

La longueur du support 23 est choisie telle que le support 23 puisse actionner le commutateur de marche arrière 29 lors de l'enclenchement de la marche arrière de la boîte de vitesses. Dans ce cas, la cible 19 dans son support 23 se déplace en direction d'un piston 31 de commande du commutateur 29 et enfonce celui-ci de manière à activer les feux de recul.

Selon une première variante non représentée, on peut prévoir que la cible 19 avec son support occupe l'emplacement d'un tel commutateur de marche arrière et que la détection de l'enclenchement de la marche arrière est réalisée par le capteur selon l'invention. En cas de détection de la marche arrière par le capteur, un signal de commande est transmis à un relais de puissance qui lui alimentera les feux de recul avec la puissance électrique nécessaire.

Selon une deuxième variante non représentée, on peut également prévoir de fixer la cible à l'extrémité 11.

Selon une troisième variante non représentée, on peut également prévoir de fixer la cible radialement à la tige d'actionnement.

Bien entendu, dans ces cas, le positionnement du composant de mesure 21 est aménagé en conséquence pour se trouver sensiblement en face de la cible 19.

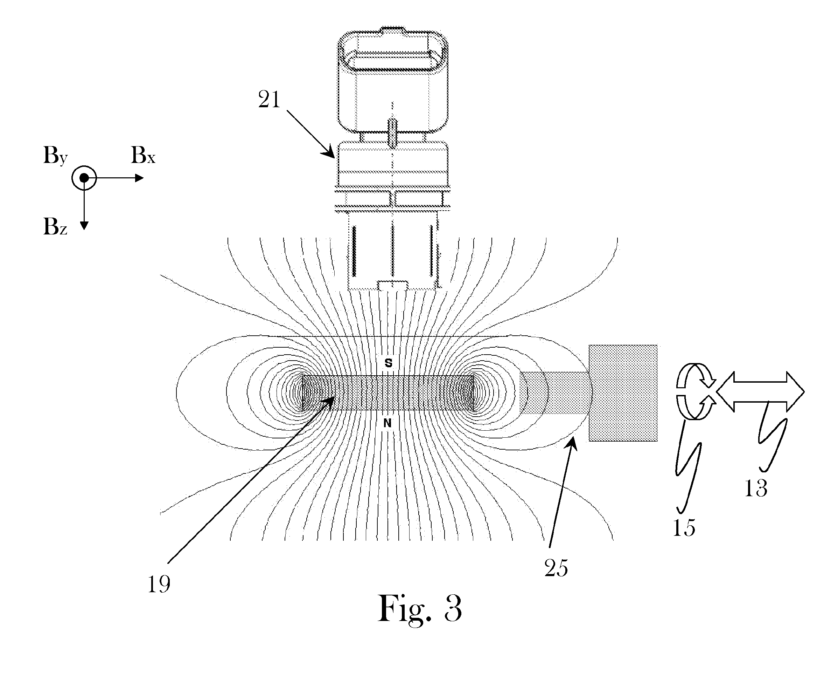

La cible 19 possède avantageusement une forme générale d'un parallélépipède. Son aimantation pôle Nord - pôle Sud est telle que les lignes de champ au centre sont sensiblement perpendiculaires par rapport aux grandes surfaces du parallélépipède (voir par exemple la figure 3).

De préférence, la longueur de la cible 19 est inférieure ou égale à la course en translation de la tige d'actionnement. Avantageusement, la longueur de la cible 19 est comprise entre 0,75*Lc et 0,9*Lc, préférentiellement entre 0,8*Lc et 0,85*Lc, et de façon optimale à environ 0,833*Lc. De cette façon le rapport coût et fiabilité de mesure peut être optimisé.

Concernant la largeur de la cible 19, celle-ci est choisie comprise entre 8mm et 11mm, de préférence égale à environ 9mm pour obtenir une course de détection en rotation d'environ 80°.

Le composant 21 à effet Hall est donc apte à mesurer un champ magnétique selon trois directions orthogonales pour déterminer la position et l'orientation de la cible 19 dans l'espace et pour en déduire la position de la boîte de vitesses.

Ce composant comprend avantageusement des cellules Hall implantées sur un circuit intégré et un concentrateur de flux pour mesurer le champ magnétique selon les directions Bx, By et Bz (voir à titre d'exemple les documents US6545462 et US7038448). Dans ces documents, il est décrit comment, par un concentrateur de flux magnétique, on arrive à déformer le champ magnétique pour mesurer et pour en déduire le champ magnétique selon les trois directions Bx, By et Bz.

Le composant à effet Hall 21 est apte à être monté sur le carter 33 de la boîte de vitesses 1.

Selon un premier mode de fonctionnement, on met la boîte de vitesses en position neutre et on mémorise les signaux mesurés par le capteur 21 dans une mémoire. Ainsi, le capteur peut reconnaître la position « neutre » par comparaison avec les valeurs mémorisées. Bien entendu, une plage de tolérance est définie autour de cette position neutre pour pallier à d'éventuelles tolérances mécaniques de la boîte de vitesses en cours d'utilisation.

On peut élargir ce fonctionnement à tous les rapports de vitesses et ainsi connaître à chaque instant la position de la boîte de vitesses. Ce fonctionnement est même adapté à des boîtes de vitesses automatiques ou robotisées et on dispose ainsi d'un capteur fiable, robuste et à faible coût de revient.

On comprend donc que par un seul composant à circuit intégré pour mesurer le champ magnétique par effet Hall selon trois directions orthogonales, on arrive à déterminer la position et l'orientation de la cible de sorte que l'on peut déduire le rapport engagé de la boîte de vitesses.

La présente invention se distingue aussi par le fait qu'elle s'adapte facilement et sans grandes modifications à des boîtes de vitesses existantes, avec un coût de revient compétitif.

## Revendications

1. Boîte de vitesses d'un véhicule automobile comprenant une tige d'actionnement (3) des rapports de vitesses mobile en rotation et en translation sur des courses limitées prédéfinies et un capteur de position (17) comprenant une cible aimantée (19) fixée sur ladite tige d'actionnement (3) **caractérisée en ce que** le capteur comporte un composant à effet Hall (21) apte à mesurer un champ magnétique selon trois directions orthogonales (Bx,By,Bz) pour déterminer la position et l'orientation de la cible (19) dans l'espace et pour en déduire la position de la boîte de vitesses.

2. Boîte de vitesses selon la revendication 1, **caractérisée en ce qu'**elle comprend un support (23) de cible fixé à une extrémité (25) de ladite tige d'actionnement (3).

3. Boîte de vitesses la revendication 2, **caractérisée en ce que** le support (23) est fixé à la tige (3) à l'aide d'une goupille de fixation (27) d'orientation radiale.

4. Boîte de vitesses selon la revendication 2 ou 3, **caractérisée en ce que** l'extrémité de fixation (28) du support présente une section de centrage et d'entraînement, de préférence une section carrée, coopérant avec une forme complémentaire de l'extrémité (25) de la tige d'actionnement.

5. Boîte de vitesses selon l'une quelconque des revendications 2 à 4, **caractérisée en ce que** le support (23) est réalisé en un matériau non ferromagnétique, de préférence en matière plastique.

6. Boîte de vitesses selon l'une quelconque des revendications 2 à 5, **caractérisée en ce que** le support (23) est adapté pour fixer la cible (19) à l'extrémité de la tige (3) en regard d'un commutateur de marche arrière (29).

7. Boîte de vitesses selon la revendication 6, **caractérisée en ce que** la longueur du support (23) est choisie telle que le support (23) puisse actionner le commutateur de marche arrière (29) lors de l'enclenchement de la marche arrière de la boîte de vitesses.

8. Boîte de vitesses selon l'une quelconque des revendications 1 à 7, **caractérisée en ce que** la cible (19) possède une forme générale d'un parallélépipède.

9. Boîte de vitesses selon la revendication 8, **caractérisée en ce que** la cible (19) possède une aimantation pôle Nord - pôle Sud dont les lignes de champ au centre sont sensiblement perpendiculaires par rapport aux grandes surfaces du parallélépipède.

10. Boîte de vitesses selon l'une quelconque des revendications 8 ou 9, **caractérisée en ce que** la longueur de la cible (19) est inférieure ou égale à la course en translation de la tige d'actionnement.

11. Boîte de vitesses selon la revendication 10, **caractérisée en ce que** la longueur de la cible (19) est comprise entre 0,75*Lc et 0,9*Lc, préférentiellement entre 0,8*Lc et 0,85*Lc, et de façon optimale à environ 0,833*Lc, où Lc est la course en translation de la tige d'actionnement.

12. Boîte de vitesses selon l'une quelconque des revendications 8 à 11, **caractérisée en ce que** la largeur de la cible (19) est choisie comprise entre 8mm et 11mm, de préférence égale à environ 9mm pour obtenir une course de détection en rotation d'environ 80°.

13. Boîte de vitesses selon l'une quelconque des revendications 1 à 12, **caractérisée en ce que** le composant à effet Hall (21) est monté sur le carter (33) de la boîte de vitesses.

14. Boîte de vitesses selon l'une quelconque des revendications 1 à 13, **caractérisée en ce qu'**elle est manuelle.

15. Utilisation d'un composant à effet Hall (21) apte à mesurer un champ magnétique selon trois directions orthogonales (Bx,By,Bz) pour déterminer la position et l'orientation dans l'espace d'une cible aimantée (19) destinée à être fixée sur une tige d'actionnement (3) des rapports de vitesses, mobile en rotation et en translation sur des courses limitées prédéfinies, pour en déduire la position d'une boîte de vitesses d'un véhicule automobile.
